# EUROPEAN PATENT SPECIFICATION

(11) **EP 2 549 081 B1**
(45) Date of publication and mention of the grant of the patent: **15.11.2017**
(21) Application number: 12176758.6
(22) Date of filing: 17.07.2012
(51) Int. Cl.: F02C 9/28, G05B 13/04

(54) **System and method for auto-tuning a combustion system of a gas turbine**
Verfahren und System zur Selbstabstimmung einer Verbrennungsanlage einer Gasturbine
Système et méthode pour le réglage automatique du système de combustion d'une turbine à gaz.

(30) Priority: 21.07.2011 IT CO20110028
(43) Date of publication of application: 23.01.2013
(73) Proprietor: Nuovo Pignone S.p.A., 50127 Florence (IT)
(72) Inventor: Mochi, Gianni, 50127 Firenze (IT); Ceccherini, Gianni, 50127 Firenze (IT); Bardi, Francesco, 50127 Firenze (IT); Ghelardi, David, 50127 Firenze (IT)
(74) Representative: Illingworth-Law, William Illingworth

(56) References cited:
- EP-A1- 2 184 467
- EP-A2- 2 249 007
- US-A1- 2010 300 108

## Description

### BACKGROUND

### TECHNICAL FIELD

Embodiments of the subject matter disclosed herein generally relate to methods and systems and, more particularly, to mechanisms and techniques for automatically auto-tuning a gas turbine combustion system.

### DISCUSSION OF THE BACKGROUND

US 2010/0300108 A1 discloses an auto-tune controller for a gas turbine engine. Combustion dynamics are monitored for a plurality of conditions to determine if one or more exceeds a predetermined upper limit.

EP 2 249 007 discloses a controller for receiving operational data from sensors and comparing the data to stored operational standards.

Gas turbines are used many sectors of the industry, from military to power generation. They are used mainly to produce electrical energy. However, some gas turbines are used to propel various vehicles, airplanes, ships, etc. Depending on the application, turbines are required to operate under different settings and conditions. This has necessitated the development of control systems to maintain operation. The control systems are designed to control the combustion system of the gas turbine. Unfortunately, many of these control systems use static analysis based on fixed values to perform turbine control. Also, many of these systems require at least some degree of manual intervention, which increases costs and increases the likelihood of errors. For example, a traditional combustion system of a gas turbine has to be adjusted a couple of times over the life of the gas turbine. Specialized technician perform this step manually. These technicians have to be deployed to the site of each gas turbine, which is a slow and expensive process.

Notwithstanding these considerations, gas turbines are subject to regulations which require them to demonstrate at least a minimum level of emission control. These so-called "green" regulations serve as further impetus for controlling the operation of gas turbines. Accordingly, it would be desirable to provide systems and methods that avoid the afore-described problems and drawbacks.

### SUMMARY

The present invention provides a method for auto-tubing a combustion system of a gas turbine as defined in claim 1 and a controller as defined in claim 10. According to one exemplary embodiment, there is a method for auto-tuning a combustion system of a gas turbine, as defined in claim 1. The method includes a step of selecting a first tuning curve from a set of tuning curve for the gas turbine; a step of unbalancing a stable operating point of the gas turbine by modifying one or more operational parameters based on a predefined recipe; a step of determining tuning parameters and storing them while a current operating point of the gas turbine is brought back on the first tuning curve; and a step of generating a backup of tuning parameters to recover the stable operating point.

According to another exemplary embodiment, there is a controller in a gas turbine for auto-tuning a combustion system of the gas turbine, as defined in claim 10. The controller includes a storage device configured to store tuning curves of the gas turbine; a processor connected to the storage device and configured to, select a first tuning curve from a set of tuning curve for the gas turbine; unbalance a stable operating point of the gas turbine by modifying one or more operational parameters based on a predefined recipe; determine tuning parameters and store them while a current operating point of the gas turbine is brought back on the first tuning curve; and generate a backup of tuning parameters to recover the stable operating point.

According to an other example, there is a gas turbine that includes a combustion system; a controller having a storage device configured to store tuning curves of the combustion system of the gas turbine; and a processor connected to the storage device. The processor is configured to select a first tuning curve from a set of tuning curves for the gas turbine; unbalance a stable operating point of the gas turbine by modifying one or more operational parameters based on a predefined recipe; determine tuning parameters and store them while a current operating point of the gas turbine is brought back on the first tuning curve; and generate a backup of tuning parameters to recover the stable operating point.

According to yet another exemplary embodiment, there is a computer readable medium including computer executable instructions, wherein the instructions, when executed, implement the method for auto-tuning a combustion system of a gas turbine as discussed above.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 shows an embodiment of a system for controlling a gas turbine.
Figure 2 shows an example of a gas turbine.
Figure 3 shows one embodiment of a method for controlling a gas turbine.
Figure 4 shows conceptually how adaptive control may be performed.
Figure 5 shows another embodiment of a method for controlling a gas turbine.
Figure 6 shows one embodiment of a auto-tuning module.
Figure 7 shows one embodiment of a method for auto-tuning a gas turbine.
Figure 8 shows one embodiment of a controller in which an auto-tuning method is implemented.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a combustion system of a gas turbine. However, the embodiments to be discussed next are not limited to the gas turbine, but may be applied to other turbo-machines.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

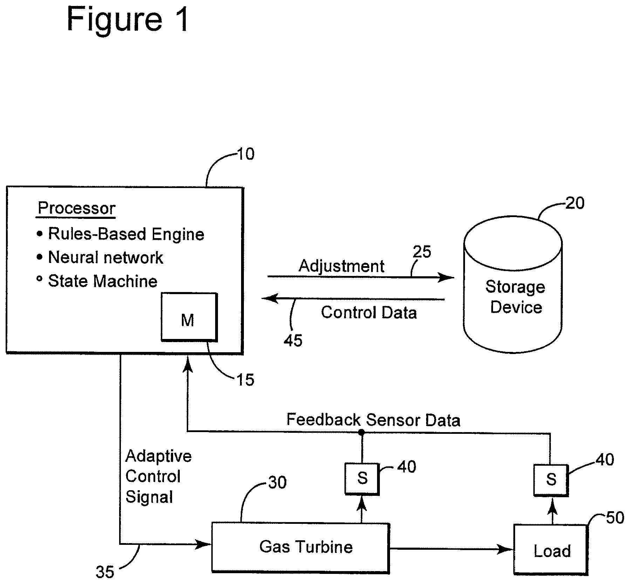

Figure 1 shows one embodiment of a system for controlling a gas turbine. Unlike static systems, the system of Figure 1 adaptively controls a combustion system of the gas turbine, by automatically generating a historical archive of status, setting, emission, and other performance-related information and then adaptively adjusting control data to improve the operation of, the efficiency of, reduce emissions from, or otherwise cause the turbine to operate within one or more intended ranges. Through this dynamic control, the system automatically "learns," without any or minimal user intervention, what control data is most appropriate for an intended turbine application.

As shown in Figure 1, the first embodiment includes a processor 10, a storage device 20, a gas turbine 30, sensors 40, and a load 50. While the first embodiment specifically relates to controlling the operation of a turbine, in other embodiments the system may be applied to dynamically and adaptively control the operation of a different type of power source or generator.

The processor 10 monitors the turbine throughout various phases of operation and then automatically controls the combustion system of the gas turbine based on scheduling and control data and algorithms stored in an internal or external memory, to be discussed in greater detail below. Structurally, the processor may be a microcomputer, controller, or other type of processing chip or set of chips driven, for example, by the aforementioned scheduling and control programs. An example of an internal memory is shown by reference numeral 15.

In accordance with one application, the processor may be or include one or more of a rules-based engine, a neural network, or a virtual or state machine that perform cognitive modeling and dynamic control. Storage device 20 may store the scheduling and control data to assist in this modeling. This storage device may also serve as the archive for storing raw sensor and other data from which turbine performance, efficiency, and emission information may be derived.

If the processor is or includes a rules-based (or inference) engine, storage device 20 may serve as a knowledge base that stores information including, for example, an initial set of settings, rules, constraints, safety margins and/or other control data to be used in mapping and modeling operation of the combustion system of the gas turbine. The storage device may also store various control algorithms to govern the turbine, in lieu of or in addition to the algorithms stored in memory 15. Also, performance, efficiency, emissions-related data including or derived from sensor data, and combustion dynamics may be archived in storage device 20 as the turbine continues to operate.

Based on this archived data, the initial settings, rules, constraints, and/or other control data may be automatically adjusted to achieve an intended level of performance. For example, the initial control data in the storage device may not be optimal for purposes of achieving a predetermined level of performance. Alternatively, the combustion system may need to be brought back to desired operation conditions. Over time, status information and sensor data may be archived and analyzed to determine, using the rules-based engine, how the control data may be adjusted to improve performance. The rules of the engine may govern these adjustments, and the adjustments may then be stored as new control data for the turbine.

Through these "learning" techniques, the processor may dynamically and adaptively build a backup curve to be used for maintaining the unit in operation in case of combustion issues. The backup curve or a new curve is able to minimize combustion dynamics that will reduce the risk of a trip and also will reduce the needs of manual tuning of the curve.

If the processor is or includes a neural network (or other techniques), the network may include a plurality of neurons (e.g., programming constructs) that correspond to different parameters, settings, constraints, and/or conditions to model operation of the turbine. The neurons may be interconnected to define how the turbine is to be controlled under different operating and/or load conditions. The interconnections and/or the neurons themselves may be adjusted, deleted, and/or replaced based on information fed back from the sensors and archived information, to cause the turbine to operate within one or more intended ranges.

According to one implementation, the neural network may be based on a finite state machine having states and transitions which correspond to predetermined conditions or operating parameters. The machine may be dynamically modified from its initial configuration in order to control the turbine based, for example, on one or more stored algorithms. Different mathematical modeling techniques may be used in other embodiments to perform the functions of the processor in the system of Figure 1.

Moreover, while artificial intelligence may prove beneficial for some applications, different processing architectures may be used in other embodiments. For example, the processor may be a microprocessor-driven circuit with preloaded control programs that perform adaptive control of the turbine based on archived sensor, performance, and/or emissions data. In other embodiments, the processor may be a notebook or other type of computer which performs the type of adaptive control described herein.

Irrespective of the processing architecture, in an exemplary application storage device 20 may store initial sets of control data for the combustion system of the gas turbine under various conditions and phases of operation. As indicated, this control data may include operating parameters, constraints, and/or scheduling data. For a DLE gas turbine, the parameters may include but are not limited to firing temperature, compressor ratio, compressor inlet pressure and temperature, compressor exit pressure and temperature, turbine exhaust temperature, inlet guide vane settings, combustion reference temperature and/or other combustion parameters, and inlet bleed heat flow as well as others.

The constraints may include emission levels, combustion dynamic pressure, lean-blow-out, compressor surge limits, compressor icing, fuel flow limits, combustor fuel distribution levels (or splits), efficiency limits, compressor clearances as well as other operational and/or environmental settings or restrictions.

The scheduling data may include exhaust temperature vs. compressor pressure ratio, fuel splits vs. combustion reference temperature, inlet bleed heat vs. inlet guide vane settings, and compressor operating limit line vs. corrected speed and inlet guide vane settings as well as others. Different or additional parameters may be used for other types of turbines and their applications.

Taken together, the information in storage device 20 allows operation of the combustion system of the gas turbine to be modeled under various conditions. Put differently, this information may "map" the operating space of the gas turbine and its associated load, which map may be used as a basis for controlling combustion and/or other operational aspects in order to maintain the gas turbine operating in a stable, optimum, or other intended range. In terms of structure, the storage device may be one or more of a memory, database, rules or knowledge base, or a combination thereof.

The gas turbine 30 may be any type of turbine including a dry low-emission (DLE) gas turbine or dry-low nitrous (NOₓ) turbine, as well as any one of a number of other turbines used for electrical power, vehicle, or industrial applications. Examples of DLE turbines include ones used for turbojet, turbofan, and turboprop-based engines.

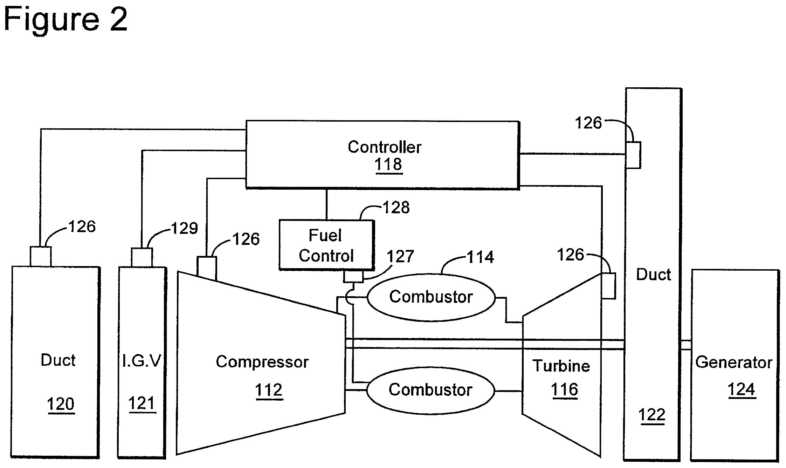

Figure 2 shows an example of a gas turbine that may be controlled in accordance with one or more embodiments described herein. The gas turbine includes a compressor 112, at least one combustor 114, a turbine 116 coupled to the compressor 112, and a computer control system 118, which, for example, may include or correspond to processor 10 in Figure 1.

The gas turbine also includes a number of ducts. For example, an inlet duct 120 feeds ambient air to compressor 112 through a set of inlet guide vanes 121, and an exhaust duct 122 directs combustion gases from the turbine 116 to or through, for example, an electrical generator 124. One or more emission control and noise abatement devices may also be included to comply with regulations.

The gas turbine also includes a fuel control system 128 for regulating the flow of fuel from a fuel supply to the combustor 114 (the combustion system) and through one or more splits between fuel flowing in different groups of nozzles. For example, a combustor may include primary and secondary nozzles while other combustors may include three different burner groups with many possible combinations of the split. The fuel control system may also select the type of fuel for the combustor. The fuel control system 128 may be a separate unit or may be a component of the main controller 118.

The controller 118 (which may correspond to processor 10 in Figure 1) may be a computer system having at least one processor that executes programs and operations to control the operation of the combustion system of the gas turbine using sensor inputs and instructions from human operators. As previously indicated, the programs and operations executed by the controller may include, among others, sensing or modeling operating parameters, modeling operational boundaries, applying operational boundary models, applying scheduling algorithms, and applying boundary control logic to close loop on boundaries.

The commands generated by the controller may cause actuators on the combustion system of the gas turbine to, for example, adjust valves (e.g., actuator 127) between the fuel supply and combustors that regulate the flow, fuel splits and type of fuel flowing to the combustors; adjust inlet guide vanes 121 (actuator 129) on the compressor; adjust inlet bleed heat; as well as activate other control settings on the gas turbine.

When used herein, the term "gas turbine" may not only refer to the turbine itself but also all of its attendant features including but not limited to the inlet duct, guide vanes, compressor, fuel controller, combustor, and outlet duct. Sensor data for these elements may be fed back to the processor to be used to adjust the initial modeling data as well as to perform other aspects relating to adaptive, dynamic control.

Returning to Figure 1, sensors 40 are located at predetermined locations throughout the turbine architecture and in some cases the load. Examples include temperature sensors, flow sensors, pressure sensors, combustion dynamic pressure sensors, and humidity sensors as well as sensors 126 in Figure 2.

The sensors may also include groups of redundant temperature sensors to monitor, for example, ambient temperature surrounding the gas turbine, compressor discharge temperature, turbine exhaust gas temperature, and other temperature measurements of the gas stream through the turbine.

Other sensors may include ones that monitor ambient pressure, and static and dynamic pressure levels at the compressor inlet and outlet turbine exhaust, as well as at other locations in the gas stream. Additional examples include wet and dry bulb thermometers, humidity sensors in the compressor inlet duct, flow sensors, speed sensors, flame detector sensors, valve position sensors, guide vane angle sensors.

The load 50 differs depending on the application. For example, the load may be an electrical generator or an engine/throttle-based load.

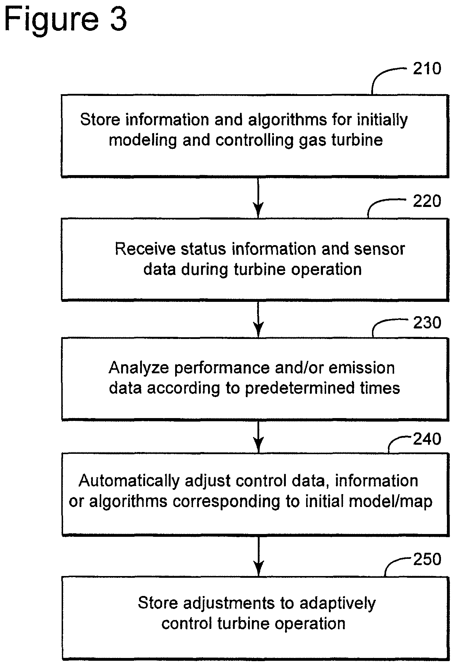

Figure 3 shows one embodiment of a method for controlling a gas turbine.

The method may be performed, for example, by the system of Figure 1 or another system and may be used to dynamically control the turbine to achieve, for example, a specific level of performance efficiency and/or to meet certain emissions standards. For illustrative purposes, the method will be described with reference to the system of Figure 1.

In an initial step, information relating to the combustion system of the gas turbine is stored in the storage device. (Block 210). As previously indicated, this information may be an initial set of control data including but not limited to settings, parameters, constraints, and/or scheduling data for initially controlling operation of the turbine. This information may be loaded into the storage device by a system manufacturer and therefore may be considered to be an initial mapping or modeling of the turbine operating points and conditions. This initial modeling may not control the turbine to operate within optimum or predetermined ranges and therefore adjustment in accordance with subsequent steps described herein is required.

A companion set of algorithms may be stored for use with the information in the storage device. The algorithms may control the timing an operation of the various parts of the turbine based on the stored control data. In accordance with one embodiment, the algorithms themselves may not be subject to adjustment. In this case, only the settings, constraints, and other stored control data may be adjusted to affect performance. In other embodiments, adjustments may be automatically made to the algorithms themselves in addition to the control data.

After the information and algorithms have been stored, the turbine may be operated based on the initial mapping and modeling data. During operation, status information, sensor data, and performance statistics are received from the sensors on a real- or near real-time basis by the processor. (Block 220). This information is archived in storage device 20 or another storage device, and/or may be sent through a network to a remote location for storage and analysis.

After a predetermined operational time has elapsed, an historical record of the performance, emissions, and/or other aspects of combustion system of the turbine operation is developed. This information may now be analyzed by the processor. (Block 230). The predetermined elapse time may correspond, for example, to a certain time of operation and/or may correspond to certain schedules used to control the turbine during various phases of operation. The analysis may involve, for example, comparing various performance statistics to predetermined standards or constraints, and/or comparing emissions levels to government or other intended limits. Based on the outcome of these comparisons, the processor may determine whether the gas turbine is operating at acceptable or optimum levels.

When the gas turbine is determined to operate outside of an intended level or range, based, for example, on the archived information and/or sensor data, the processor may automatically "tune" one or more of the initial control data (e.g., stored settings, constraints, or other information) stored for mapping or modeling the gas turbine. (Block 240). This tuning process may be performed in a variety of ways.

For example, if an efficiency or performance parameter or a protection parameter (e.g., a combustion dynamic pressure is a measure used to protect the engine by excessive vibrations) is determined to lie outside a certain range, the firing temperature may be automatically adjusted by a predetermined positive or negative increment. The performance of the turbine may then be measured to determine whether any improvement has been made. If not, additional incremental adjustments may be iteratively performed until sensor and/or other performance data indicate that the turbine is operating within the intended range. The incremented data may then be stored as part of a modified set of control data for subsequent use when, for example, the same or similar set of conditions or circumstances present themselves. (Block 250). In this way, the modeling data controlling operation of the combustion system of the gas turbine may be adaptively adjusted over time, thereby providing automatic dynamic tuning of the turbine. Also the fuel split is a parameter that can be adjusted in the same way to minimize combustion dynamics.

According to another example, the firing temperature may be set to one or more predetermined fixed values when the turbine is determined to be operating out of range. In still other embodiments, a different adjustment technique may be used.

Other parameters may also be adjusted to achieve combustion dynamics control. These parameters may include compressor ratio, compressor inlet pressure and temperature, compressor exit pressure and temperature, turbine exhaust temperature, inlet guide vane settings, combustion reference temperature and/or other combustion parameters, and inlet bleed heat flow, all of which relate to turbine efficiency. Of course, load status and conditions may also be taken into consideration when performing adjustments.

Based on the comparisons performed by the processor, various constraints may also be automatically adjusted. For example, if an emission level of the turbine is determined to exceed certain limits during one or more phases of operation, then corresponding settings of the combustion system of the gas turbine may be controlled to being those emissions under the limit. Also, when existing regulations change or new regulations are imposed, the control data corresponding to these constraints may be updated in the storage device to cause the turbine to operate in a compliant manner.

Other constraints include but are not limited to gas-fuel composition, lean-blow-out, compressor surge limits, compressor icing, fuel flow limits, combustor fuel distribution levels (or splits), and compressor clearances.

Based on the comparisons performed by the processor, various scheduling data may also be automatically adjusted. This data may include exhaust temperature vs. compressor pressure ratio, fuel splits vs. combustion reference temperature, inlet bleed heat vs. inlet guide vane settings, and compressor operating limit line vs. corrected speed and inlet guide vane settings.

The result of these steps is to form an improved set of control data for modeling and controlling operation of the turbine. The adjusted control data may be stored in storage device 20 in Figure 1 and may be adjusted based on signals 25 from processor 10. The adjusted control data may then be subsequently called by the processor through signal line 45 and control signals may be generated and sent to the turbine through signal line 35.

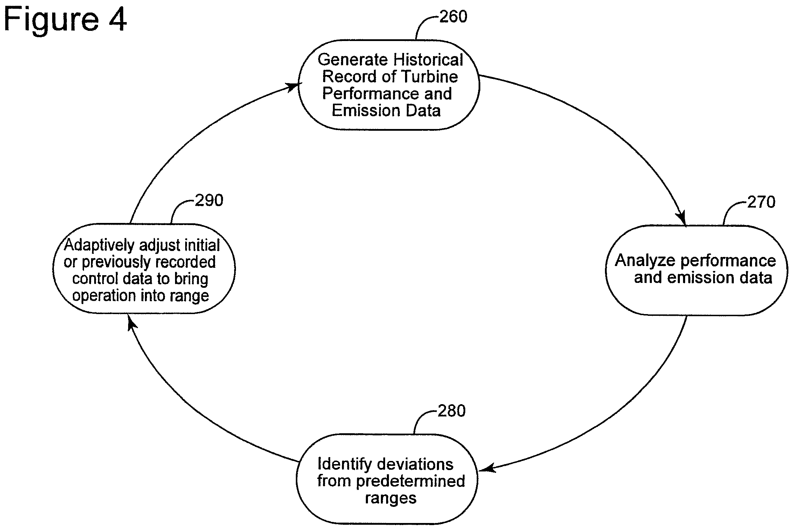

Figure 4 shows conceptually how the aforementioned adaptive method may be performed. After an initial set of control data is stored, the turbine is operated and performance, emission, and/or other turbine-related data is archived to generate an historical record. (Block 260). At programmed times or regular intervals, the operation of the gas turbine is purposely changed (e.g., unbalanced) and current data and the archived data is analyzed (Block 270) to identify aspects of turbine performance that lie outside of predetermined ranges or which exceed certain constraints or limits (Block 280). The control data is then adjusted to bring performance within the ranges or limits (Block 290). Through this process, the control data is adaptively adjusted to improve performance of the turbine and the control system "learns" how the gas turbine reacts at changing parameters and how the gas turbine can be brought back within normal operating conditions.

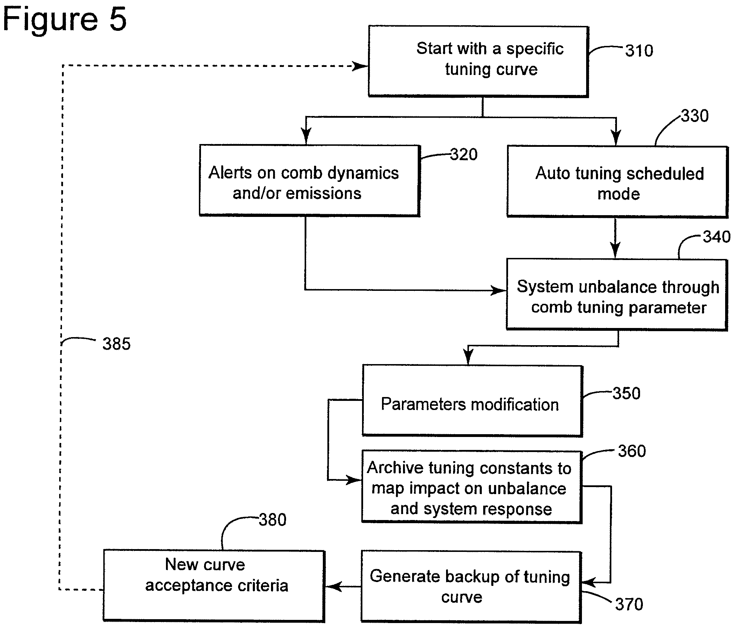

Figure 5 shows another embodiment of a method for controlling a gas turbine. This method may be implemented in software, dedicated hardware or a combination of them. As in the previous method, the embodiment of Figure 5 may be performed by the system of Figure 1 or another system to control the turbine to operate within one or more predetermined performance or emission ranges. The method is likely implemented in the controller 118 shown in Figure 2. A more detailed structure of the controller 118 is discussed later.

In an initial step, an initial tuning curve is selected for use in controlling the combustion system of the gas turbine. (Block 310). A given gas turbine has a plurality of tuning curves that are stored and used for operating the combustion system of the gas turbine. The tuning curve may designate one or more settings, parameters, or constraints of different elements of the turbine, including but not limited to any of the ones previously discussed in other embodiments. The tuning curve, therefore, may be considered to provide an initial mapping of the gas turbine for modeling operation in its various phases of operation at steady-state.

According to one example, the tuning curve may be one relating turbine temperature exhaust (ttx) to turbine pressure ratio (tpr). The turbine temperature exhaust may correspond to the temperature at an outlet of the turbine and the turbine pressure ratio may correspond to a ratio between discharge pressure of the compressor and exhaust pressure of the turbine. Alternatively, the pressure readings may be taken at other locations of the gas turbine. According to another example relevant to the combustion system, the tuning curve may be one relating a flame temperature of burners groups to a combustor inlet temperature.

Other tuning curves may relate a combination of the following parameters: firing temperature, speed, inlet gate vane angle, humidity, and bleed conditions, just to name a few. In addition, different curves may be used under different environmental conditions. For example, one curve may be used when the humidity is at a relatively high level and another curve may be used when humidity is at a lower level. The same may be true based on ambient temperature. Still other curves may relate to gas-fuel ratios or other combustion-related parameters in order to allow for adjustments in efficiency, emissions and (acceptable) combustion dynamics.

After operation has begun based on the initial tuning curve, one of two events may occur. The first event corresponds to the case where an alert is received (Block 320). The alert may be generated by an internal control algorithm when (Block 320). The alert may be generated by an internal control algorithm when a detected combustion parameter falls into or out of a predetermined range and/or when a detected emissions parameter violates a predetermined constraint. When this occurs, the alert information is send to the controller 118 to implement an unbalancing step (Block 340), which is discussed later. The ranges, constraints, or thresholds used to generate the alert may be programmed into the system, for example, by the manufacturer or by a technician on site. It is noted that the emission parameters may be directly measured at the gas turbine or evaluated by a dedicated module based on operating parameters of the gas turbine.

The second event that triggers the unbalancing step 340 corresponds to the case where a predetermined scheduling algorithm is executed. (Block 330). This scheduling algorithm (auto-tuning algorithm) may cause the controller to receive and analyze sensor data at regular or predetermined intervals throughout the period of operation, in order to determine performance efficiency and/or emissions. This may happen a couple of times per day, for example, during an initial learning period. It is noted that when the step 330 is taking place, the gas turbine operates under a steady state.

When the unbalance step is performed, the controller determines one or more parameters of the gas turbine. The gas turbine operates just before this step under a steady state. The controller modifies the one or more parameters of the gas turbine so that the gas turbine moves away from the steady state. In other words, after the unbalance step 340, the operating point of the gas turbine moves away from the specific tuning curve selected in step 310. At this stage, action needs to be taken so that the gas turbine moves back on the tuning curve and operates under a steady state.

If the unbalancing step 340 is triggered by the step 320, the unbalancing step 340 further unbalances the gas turbine. Examples of step 350 and they include but are not limited to fuel split in various rings of the gas turbine, split of fuel between burners, fuel/air ratio, bias, etc. However, the margins of these parameters are defined during this period to prevent the gas turbine to be unbalanced beyond a critical state from which the gas turbine cannot be brought back to the steady state.

The unbalancing may involve deviating from the initial tuning curve, for example, by automatically incrementing or otherwise adjusting iteratively or on a one-time basis one or more related parameters as previously described. These parameters may be related to the combustion system of the gas turbine.

After the unbalancing step (which may happen a couple of times a day for a learning period, e.g., 3 to 12 months), the controller monitors changes in performance and/or emissions of the gas turbine. (Block 360). The tuning parameters are recorded to map an impact of the unbalance on the system and how the system responds to the imbalance.

In step 370, the controller adjusts appropriate parameters (depending on which parameters have been unbalanced in step 350) in order to bring the gas turbine to operate under a steady state. These processes of unbalancing the gas turbine with various combinations of parameters and then bringing back the operation point of the gas turbine in a desired curve constitute the learning step 370. During this step a backup for the specific tuning curve under study is generated. This backup is improved or extended during the "learning period." Optionally, the backup may be proposed to the operator, by the controller, when in a real case situation the gas turbine becomes unbalanced. The tuning curve new acceptance criteria are formulated/stored in step 380 after which the controller returns to step 310 to select another tuning curve. The steps described above are repeated until all turning curves have been studied. This process is iteratively performed, each time making further and further adjustments until an adaptively generated tuning curve is automatically generated to optimize gas turbine performance or to otherwise cause the turning to operate within one or more intended ranges or levels.

A number of optional steps may be included. For example, after the tuning curve has been modified, backup information corresponding to the modified tuning curve may be stored in an external storage device in order to allow the curve to be recovered if a malfunction occurs. The backup information may be transferred to the external storage device, for example, through the internet or back-channel communications link. Also, storing this curve will allow an operator to make further adjustments, if desired.

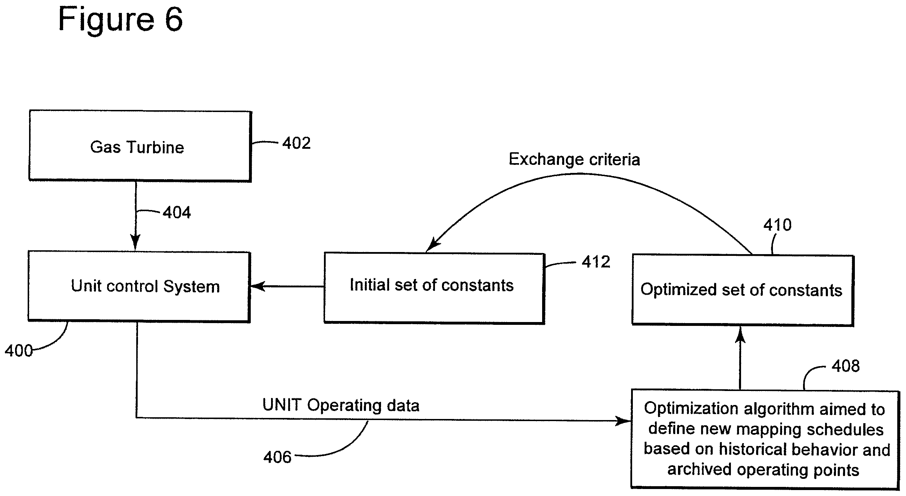

The above discussed method may be implemented in a controller as illustrated in Figure 6. The controller 400 may be the controller of the combustion system of the gas turbine 402 or a controller remotely situated relative to the gas turbine. The controller 400 receives operational data from the gas turbine via link 404 and feds this information via link 406 to an auto-tuning module 408. The auto-tuning module 408 may be part or independent of the controller 400. The controller 408 includes an optimization algorithm that basically implements the method discuss in Figure 5. The optimized set of constants 410 is generated by the module 408 and these constants are provided either directly to the controller 400 or to the operator of the controller 400 for consideration. The operator of the gas turbine then can modify the initial set of constants 412 that are used to control the gas turbine based on the optimized set of constants 410.

Thus, the gas turbine having the auto-tuning module 408 will use the operating parameters and gas turbine daily records to define a surface of operating points. The module verifies the distance between the operating point and the critical conditions in order to define a backup of tuning constants (e.g., the identified tuning constants may be tables linking a firing temperature Tfire with a T3 in different combustion modes and for different combustion rings) to recover stable operations and maintain the gas turbine in production. Using this map and analyzing the current operating point the module will propose and correct new sets of combustion parameters enabling reliable operations and system self adjustment. Thus, such a novel module to be provided to the gas turbine advantageously learns from the history of the gas turbine to define a map of safe conditions, collects data from the gas turbine to define safety margins for operability, helps the operators to manage gas turbines reducing the need for tuning of the combustion system, provides a set of diagnostic indicators to understand potential issues in the combustion section, and provides a system that reduces emissions by updating combustion tuning constants based on previous optimized states.

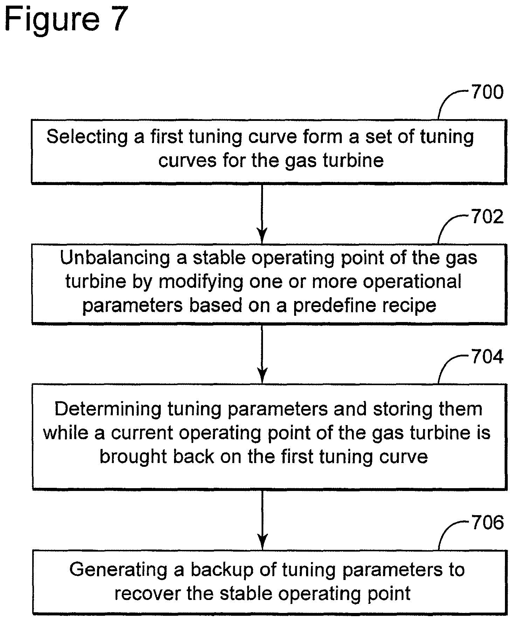

According to an exemplary embodiment illustrated in Figure 7, there is a method for auto-tuning a combustion system of a gas turbine. The method includes a step 700 of selecting a first tuning curve from a set of tuning curve for the gas turbine; a step 702 of unbalancing a stable operating point of the gas turbine by modifying one or more operational parameters based on a predefined recipe; a step 704 of determining tuning parameters and storing them while a current operating point of the gas turbine is brought back on the first tuning curve; and a step 706 of generating a backup of tuning parameters to recover the stable operating point.

Optionally, the method includes a step of learning a behavior of the gas turbine by selecting a second tuning curve and repeating the above steps for the second tuning curve, or a step of storing daily operating parameters of the gas turbine and a step of generating the backup of tuning parameters based on the stored daily operating parameters and current operating parameters. Further, the method may include a step of checking a distance between critical conditions of the gas turbine and the backup of tuning parameters, a step of receiving alerts related to combustion dynamic and gas turbine emissions, and a step of generating the backup of tuning parameters based on the stored daily operating parameters, current operating parameters, and gas turbine emissions.

In accordance with another embodiment, a computer-readable medium for storing computer instructions and code may be provided to execute all or a portion of the steps of the embodiments of the control methods previously described. The computer-readable medium may, for example, correspond to memory 15 in Figure 1 or another storage device.

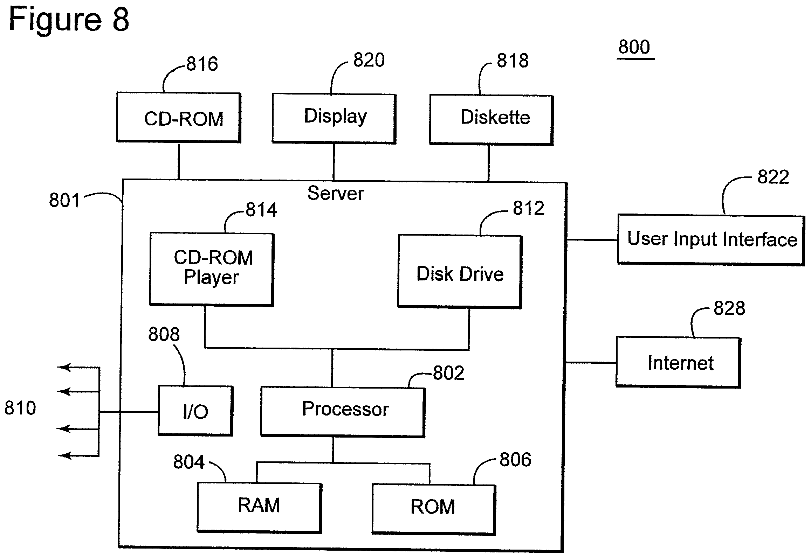

An example of a representative controller and/or module capable of carrying out operations in accordance with the exemplary embodiments discussed above is illustrated in Figure 8. Hardware, firmware, software or a combination thereof may be used to perform the various steps and operations described herein. The structure 800 of Figure 8 is an exemplary controller/module that may be used in connection with such a system.

The exemplary structure 800 suitable for performing the activities described in the exemplary embodiments may include server 801, which may correspond to any of the controllers shown in Figures 2 and 6. Such a server 801 may include a central processor (CPU) 802 coupled to a random access memory (RAM) 804 and to a read-only memory (ROM) 806. The ROM 806 may also be other types of storage media to store programs, such as programmable ROM (PROM), erasable PROM (EPROM), etc. The processor 802 may communicate with other internal and external components through input/output (I/O) circuitry 808 and bussing 810, to provide control signals and the like. The processor 802 carries out a variety of functions as is known in the art, as dictated by software and/or firmware instructions.

The server 801 may also include one or more data storage devices, including hard and floppy disk drives 812, CD-ROM drives 814, and other hardware capable of reading and/or storing information such as DVD, etc. In one embodiment, software for carrying out the above discussed steps may be stored and distributed on a CD-ROM 816, diskette 818 or other form of media capable of portably storing information. These storage media may be inserted into, and read by, devices such as the CD-ROM drive 814, the disk drive 812, etc. The server 801 may be coupled to a display 820, which may be any type of known display or presentation screen, such as LCD displays, plasma display, cathode ray tubes (CRT), etc. A user input interface 822 is provided, including one or more user interface mechanisms such as a mouse, keyboard, microphone, touch pad, touch screen, voice-recognition system, etc.

The server 801 may be coupled to other computing devices, such as components of the gas turbine. The server may be part of a larger network configuration as in a global area network (GAN) such as the Internet 828, which allows ultimate connection to the various landline and/or mobile client/watcher devices.

Such a structure 800 (controller) may be configured to perform one or more of the following steps: learn a behavior of the gas turbine by selecting a second tuning curve and repeating the above steps for the second tuning curve; store daily operating parameters of the gas turbine; generate the backup of tuning parameters based on the stored daily operating parameters and current operating parameters; check a distance between critical conditions of the gas turbine and the backup of tuning parameters; receive alerts related to combustion dynamic and gas turbine emissions; and generate the backup of tuning parameters based on the stored daily operating parameters, current operating parameters, and gas turbine emissions.

As also will be appreciated by one skilled in the art, the exemplary embodiments may be embodied in a wireless communication device, a telecommunication network, as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer readable medium may be utilized including hard disks, CD-ROMs, digital versatile disc (DVD), optical storage devices, or magnetic storage devices such a floppy disk or magnetic tape. Other non-limiting examples of computer readable media include flash-type memories or other known memories.

The disclosed exemplary embodiments provide a controller, a method, and computer software for auto-tuning a gas turbine. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method for auto-tuning a combustion system of a gas turbine, the method comprising:
selecting (700) a first tuning curve from a set of turning curves for the gas turbine;
unbalancing (702) a stable operating point of the gas turbine by modifying one or more operational parameters based on a predefined recipe;
determining (704) tuning parameters and storing them while a current operating point of the gas turbine is brought back on the first tuning curve; and
generating (706) a backup of tuning parameters to recover the stable operating point.

2. The method of Claim 1, further comprising:
learning a behavior of the gas turbine by selecting a second tuning curve and repeating the above steps for the second tuning curve.

3. The method of Claim 1 or Claim 2, further comprising:
storing daily operating parameters of the gas turbine.

4. The method of any preceding Claim, further comprising:
generating the backup of tuning parameters based on the stored daily operating parameters and current operating parameters.

5. The method of any preceding Claim, further comprising:
checking a distance between critical conditions of the gas turbine and the backup of tuning parameters.

6. The method of any preceding Claim, further comprising:
receiving alerts related to combustion dynamics and gas turbine emissions.

7. The method of any preceding Claim, further comprising:
generating the backup of tuning parameters based on the stored daily operating parameters, current operating parameters, and gas turbine emissions.

8. The method of any preceding claim, wherein the tuning curve provides an initial mapping of the gas turbine for modeling operation in its various phases of operation at steady state.

9. The method of any preceding claim, wherein the tuning curve designates one or more settings, parameters or constraints of different elements of the turbine.

10. A controller (118) for a gas turbine for auto-tuning a combustion system of the gas turbine, the controller comprising:
a storage device (20) configured to store tuning curves of the gas turbine;
a processor (10) connected to the storage device and configured to,
select a first tuning curve from a set of turning curves for the gas turbine;
unbalance a stable operating point of the gas turbine by modifying one or more operational parameters based on a predefined recipe;
determine tuning parameters and store them while a current operating point of the gas turbine is brought back on the first tuning curve; and
generate a backup of tuning parameters to recover the stable operating point.

11. The controller of claim 10, wherein the tuning curve provides an initial mapping of the gas turbine for modeling operation in its various phases of operation at a steady state.

12. The controller of claim 10 or claim 11, wherein the tuning curve designates one or more settings, parameters or constraints of different elements of the turbine.

13. A gas turbine comprising a combustion system and a controller (118) according to any of claims 10 to 12.

14. A computer readable medium including computer executable instructions, wherein the instructions, when executed, implement the method of any of claims 1 to 9.

## Patentansprüche

1. Verfahren für ein automatisches Tuning eines Verbrennungssystems einer Gasturbine, wobei das Verfahren umfasst:
Auswählen (700) einer ersten Tuningkurve aus einem Satz von Tuningkurven für die Gasturbine,
Verstimmen (702) eines stabilen Arbeitspunkts der Gasturbine durch Verändern eines oder mehrerer Betriebsparameter auf Basis einer vorher festgelegten Vorschrift,
Bestimmen (704) von Tuningparametern und Speichern derselben, während ein aktueller Arbeitspunkt der Gasturbine auf die erste Tuningkurve zurückgesetzt wird,
Erzeugen (706) einer Sicherungskopie der Tuningparameter, um den stabilen Arbeitspunkt wieder einzustellen.

2. Verfahren nach Anspruch 1, ferner umfassend:
Erkennen eines Verhaltens der Gasturbine durch Auswählen einer zweiten Tuningkurve und Wiederholen der obigen Schritte für die zweite Tuningkurve.

3. Verfahren nach Anspruch 1 oder nach Anspruch 2, ferner umfassend:
Speichern der täglichen Betriebsparameter der Gasturbine.

4. Verfahren nach einem vorhergehenden Anspruch, ferner umfassend:
Erzeugen der Sicherungskopie der Tuningparameter auf Basis der gespeicherten täglichen Betriebsparameter und der aktuellen Betriebsparameter.

5. Verfahren nach einem vorhergehenden Anspruch, ferner umfassend:
Überprüfen eines Abstands zwischen kritischen Zuständen der Gasturbine und der Sicherungskopie der Tuningparameter.

6. Verfahren nach einem vorhergehenden Anspruch, ferner umfassend:
Empfangen von Warnhinweisen bezüglich der Verbrennungsdynamik und der Gasturbinenemissionen.

7. Verfahren nach einem vorhergehenden Anspruch, ferner umfassend:
Erzeugen der Sicherungskopie der Tuningparameter auf Basis der gespeicherten täglichen Betriebsparameter, der aktuellen Betriebsparameter und der Gasturbinenemissionen.

8. Verfahren nach einem vorhergehenden Anspruch, wobei die Tuningkurve eine Anfangsaufnahme der Gasturbine für das Modellieren des Betriebs in seinen verschiedenartigen Betriebsphasen in einem stationären Zustand bereitstellt.

9. Verfahren nach einem vorhergehenden Anspruch, wobei die Tuningkurve eine oder mehrere Einstellungen, Parameter oder Beschränkungen von verschiedenen Elementen der Turbine festlegt.

10. Steuergerät (118) für eine Gasturbine für ein automatisches Tuning eines Verbrennungssystems der Gasturbine, wobei das das Steuergerät aufweist:
eine Speichervorrichtung (20), die eingerichtet ist, Tuningkurven der Gasturbine zu speichern,
einen Prozessor (10), der an die Speichervorrichtung angeschlossen und eingerichtet ist zum:
Auswählen einer ersten Tuningkurve aus einem Satz von Tuningkurven für die Gasturbine,
Verstimmen eines stabilen Arbeitspunkts der Gasturbine durch Verändern eines oder mehrerer Betriebsparameter auf Basis einer vorher festgelegten Vorschrift, Bestimmen von Tuningparametern und Speichern derselben, während ein aktueller Arbeitspunkt der Gasturbine auf die erste Tuningkurve zurückgesetzt wird, Erzeugen einer Sicherungskopie
der Tuningparameter, um den stabilen Arbeitspunkt wieder einzustellen.

11. Steuergerät nach Anspruch 10, wobei die Tuningkurve eine Anfangsaufnahme der Gasturbine für das Modellieren des Betriebs in seinen verschiedenartigen Betriebsphasen in einem stationären Zustand bereitstellt.

12. Steuergerät nach Anspruch 10 oder Anspruch 11, wobei die Tuningkurve eine oder mehrere Einstellungen, Parameter oder Beschränkungen von verschiedenen Elementen der Turbine festlegt.

13. Gasturbine mit einem Verbrennungssystem und einem Steuergerät (118) nach einem der Ansprüche 10 bis 12.

14. Computerlesbares Medium , das vom Computer ausführbare Anweisungen aufweist, die, wenn sie ausgeführt werden, das Verfahren nach einem der Ansprüche 1 bis 9 realisieren.

## Revendications

1. Procédé d'autoréglage d'un système de combustion d'une turbine à gaz, le procédé comprenant :
la sélection (700) d'une première courbe de réglage parmi un ensemble de courbes de réglage pour la turbine à gaz ;
le déséquilibre (702) d'un point de fonctionnement stable de la turbine à gaz en modifiant un ou plusieurs paramètres opérationnels sur la base d'une formulation prédéfinie ;
la détermination (704) de paramètres de réglage et leur stockage tandis qu'un point de fonctionnement courant de la turbine à gaz est ramené sur la première courbe de réglage ; et
la génération (706) d'une sauvegarde de paramètres de réglage pour récupérer le point de fonctionnement stable.

2. Procédé selon la revendication 1, comprenant en outre :
l'apprentissage d'un comportement de la turbine à gaz en choisissant une seconde courbe de réglage et en répétant les étapes précitées pour la seconde courbe de réglage.

3. Procédé selon la revendication 1 ou la revendication 2, comprenant en outre :
le stockage de paramètres de fonctionnement quotidiens de la turbine à gaz.

4. Procédé selon l'une quelconque des revendications précédentes, comprenant en outre :
la génération de la sauvegarde de paramètres de réglage sur la base des paramètres de fonctionnement quotidiens stockés et des paramètres de fonctionnement courants.

5. Procédé selon l'une quelconque des revendications précédentes, comprenant en outre :
le contrôle d'une distance entre des conditions critiques de la turbine à gaz et la sauvegarde de paramètres de réglage.

6. Procédé selon l'une quelconque des revendications précédentes, comprenant en outre :
la réception d'alertes en rapport avec la dynamique de combustion et les émissions de la turbine à gaz.

7. Procédé selon l'une quelconque des revendications précédentes, comprenant en outre :
la génération de la sauvegarde de paramètres de réglage sur la base des paramètres de fonctionnement quotidiens stockés, des paramètres de fonctionnements courants et des émissions de la turbine à gaz.

8. Procédé selon l'une quelconque des revendications précédentes, dans lequel la courbe de réglage fournit une cartographie initiale de la turbine à gaz pour modéliser le fonctionnement dans ses diverses phases de fonctionnement en régime permanent.

9. Procédé selon l'une quelconque des revendications précédentes, dans lequel la courbe de réglage désigne un(e) ou plusieurs réglages, paramètres ou contraintes de différents éléments de la turbine.

10. Dispositif de commande (118) pour une turbine à gaz pour l'autoréglage d'un système de combustion de la turbine à gaz, le dispositif de commande comprenant :
un dispositif de stockage (20) configuré pour stocker des courbes de réglage de la turbine à gaz ;
un processeur (10) connecté au dispositif de stockage et configuré pour :
choisir une première courbe de réglage parmi un ensemble de courbes de réglage pour la turbine à gaz ;
déséquilibrer un point de fonctionnement stable de la turbine à gaz en modifiant un ou plusieurs paramètres sur la base d'une formulation prédéfinie ;
déterminer des paramètres de réglage et les stocker tandis qu'un point de fonctionnement courant de la turbine à gaz est ramené sur la première courbe de réglage ; et
générer une sauvegarde de paramètres de réglage pour récupérer le point de fonctionnement stable.

11. Dispositif de commande selon la revendication (10), dans lequel la courbe de réglage fournit une cartographie initiale de la turbine à gaz pour modéliser un fonctionnement dans ses diverses phases de fonctionnement en régime permanent.

12. Dispositif de commande selon la revendication 10 ou la revendication 11, dans lequel la courbe de réglage désigne un(e) ou plusieurs réglages, paramètres ou contraintes de différents éléments de la turbine.

13. Turbine à gaz comprenant un système de combustion et un dispositif de commande (118) selon l'une quelconque des revendications 10 à 12.

14. Support lisible par ordinateur comprenant des instructions exécutables par ordinateur, dans lequel les instructions, lorsqu'elles sont exécutées, mettent en oeuvre le procédé selon l'une quelconque des revendications 1 à 9.
